# EUROPEAN PATENT SPECIFICATION

(11) **EP 3 550 931 B1**
(45) Date of publication and mention of the grant of the patent: **28.12.2022**
(21) Application number: 18165920.2
(22) Date of filing: 05.04.2018
(51) Int. Cl.: H04W 76/38

(54) **USE OF A USER EQUIPMENT CONNECTED TO A MOBILE NETWORK, IN WHICH THE USER EQUIPMENT USES AN ACCESS POINT NAME FOR HOME OPERATOR SERVICES**
VERWENDUNG EINES MIT EINEM MOBILEN NETZWERK VERBUNDENEN BENUTZERGERÄTS, IN DEM DAS BENUTZERGERÄT EINEN ZUGRIFFSPUNKTNAMEN FÜR HOME-BEDIENERDIENSTE BENUTZT
UTILISATION D'UN ÉQUIPEMENT UTILISATEUR CONNECTÉ À UN RÉSEAU MOBILE, DANS LEQUEL L'ÉQUIPEMENT UTILISATEUR UTILISE UN NOM DE POINT D'ACCÈS POUR LES SERVICES DE L'OPÉRATEUR DOMESTIQUE

(43) Date of publication of application: 09.10.2019
(73) Proprietor: Deutsche Telekom AG, 53113 Bonn (DE)
(72) Inventor: MELANDER, Mari, 53225 Bonn (DE); LINDEN, Christoph, 53639 Königswinter (DE)
(74) Representative: Schwöbel, Thilo K.

(56) References cited:
- EP-A1- 2 871 906
- EP-A2- 2 424 323
- US-A1- 2011 280 198

## Description

### BACKGROUND

The present invention relates to a method for an improved usage of a user equipment being connected to a mobile communication network via a radio access network of or associated with the mobile communication network, wherein the user equipment is enabled to use a specific packet network connection, being a packet network connection using an access point name for home operator services for the transmission of home operator services data, and wherein the user equipment comprises or receives a packet network connection idle timer information,

Furthermore, the present invention relates to a system for an improved usage of a user equipment being connected to a mobile communication network via a radio access network of or associated with the mobile communication network, the system comprising the mobile communication network and the user equipment, wherein the user equipment is enabled to use a specific packet network connection, being a packet network connection using an access point name for home operator services for the transmission of home operator services data, wherein the user equipment comprises or receives a packet network connection idle timer information.

Additionally, the present invention relates to a mobile communication network for an improved usage of a user equipment being connected to the mobile communication network via a radio access network of or associated with the mobile communication network, wherein the mobile communication network is provided such that the user equipment is enabled to use a specific packet network connection, being a packet network connection using an access point name for home operator services for the transmission of home operator services data, wherein the mobile communication network is provided such that the user equipment comprises or receives a packet network connection idle timer information.

Additionally, the present invention relates to a user equipment for an improved usage of a mobile communication network to which the user equipment is connected via a radio access network of or associated with the mobile communication network, wherein the user equipment is enabled to use a specific packet network connection, being a packet network connection using an access point name for home operator services for the transmission of home operator services data, wherein the user equipment comprises or receives a packet network connection idle timer information.

Furthermore, the present invention relates to a program and to a computer-readable medium for an improved usage of a user equipment being connected to a mobile communication network and using a packet network connection using an access point name for home operator services for the transmission of home operator services data.

The present invention generally relates to user equipments attaching to a mobile communication network using different access methods - such as, e.g., voice over LTE or the like - together with, e.g., IP multimedia subsystem technology in order to initiate calls.

For user equipments being attached or connected to a mobile communication network using voice over LTE (VoLTE) and/or voice over WiFi (VoWiFi), when - relating to such a user equipment - the user wants to change the supplementary service settings (e.g. configuration regarding call forwarding or the like), this is typically done over the Ut interface with a protocol called XCAP (XML Configuration Access Protocol) and the user equipment typically uses a packet data connection to the mobile communication network (being typically the home mobile communication network; i.e. in case that the user equipment is connected (or attached) to a visited mobile communication network, it is the home mobile communication network from where such information (or data) is typically retrieved or to which such information (or data) is typically transmitted.

Typically, the user equipment opens an APN (access point name) defined for Home Operator Services (HOS) - access point name for home operator services -, which is configured according to the operator APN concept. Typically, also other services (than XCAP/Ut) can use the access point name for home operator services, a typical example is MMS (multimedia messaging service). Typically, the access point name for home operator services can be used using various access technologies such as, e.g., 3G or LTE or EPC or integrated WiFi or direct WiFi.

Typically, the access point name for home operator services is needed only "on demand" for a comparatively short while, e.g. when the user modifies the settings; afterwards, the user equipment can close it.

However, in many cases the access point name for home operator services is not reliably closed, leading to, inter alia, burdening the network, especially such that another APN, that actually would be needed, cannot be opened, because resources are limited.

Document US2011280198 discloses a mobile terminal includes a controller to establish a connection with a packet data network through a wireless communication unit. The controller selects one of a plurality of timer values that are respectively mapped to multiple applications for transmitting/ receiving packet data through the connection based on a predetermined priority, operates a timer based on the selected timer value, and controls the connection based on the timer.

### SUMMARY

An object of the present invention is to provide an effective and simple solution to realize an improved usage of a user equipment being connected to a mobile communication network via a radio access network of or associated with the mobile communication network, wherein the user equipment is enabled to use a specific packet network connection, being a packet network connection using an access point name for home operator services for the transmission of home operator services data such that the resources of the mobile communication network are used in a manner as efficiently as possible.

The object of the present invention is achieved by a method for an improved usage of a user equipment being connected to a mobile communication network via a radio access network of or associated with the mobile communication network,
wherein the user equipment is enabled to use a specific packet network connection, being a packet network connection using an access point name for home operator services for the transmission of home operator services data,
wherein the user equipment comprises or receives a packet network connection idle timer information,
wherein the method comprises the following steps:
   - in a first step, the packet network connection idle timer information is transmitted, by the mobile communication network, to the user equipment,
   - in a second step, partly during or subsequent to the first step, the specific packet network connection is activated or initialized for the transmission of home operator services data, and the transmission of the home operator services data is started,
   - in a third step, subsequent to the second step, - upon the transmission of the home operator services data being completed or terminated - the specific packet network connection is idle, and it is checked whether the specific packet network connection stays idle for a period of time corresponding to the packet network connection idle timer information after completing or terminating the transmission of the home operator services data,
   - in a fourth step, subsequent to the third step, - in case that the specific packet network connection stayed idle for a period of time corresponding to the packet network connection idle timer information - the specific packet network connection is deactivated or closed by the user equipment.

By assuring that the access point name for home operator services only stays open at maximum for a limited period of time after usage - especially in case that the number of parallel connections from one and the same user equipment is limited by the packet network - it is advantageously possible according to the present invention that the specific packet network connection using the access point name for home operator services does not stay open and idle for too long, and, hence, other potential further connections of the user equipment are not rejected that would otherwise exceed the maximum number of parallel connections from one and the same user equipment in case the specific packet network connection would stay open. Furthermore, it is advantageously possible according to the present invention to assure that the access point name for home operator services, i.e. the specific packet network connection, only stays open for a limited period of time after usage and that - with regard to a plurality of user equipments using the mobile communication network - the number of open connections for that purpose, i.e. connections regarding the access point name for home operator services, is as low as possible in order to reduce network load and/or resources dedicated to such connections regarding the access point name for home operator services.

Presently or conventionally, different behaviors of user equipments might be applied and/or defined regarding when an access point name for home operator services should be closed, depending, inter alia, on the manufacturer of the user equipment and/or on the operator of the mobile communication network or the like. According to the present invention, it is advantageously possible that a configuration parameter, the packet network connection idle timer information, or also "XCAP on demand interval" is defined such that the home operator (i.e. typically the operator of the home mobile communication network of the user equipment) can configure, how long the user equipment should wait before closing the connection, i.e. how much time - at maximum - an access point name for home operator services should stay open and idle, i.e. not being used for data transmission (typically after having been opened and used for a transmission of data).

Hence, according to the present invention, an improved usage is possible for such a user equipment (being connected, at least indirectly (using a visited mobile communication network) to its home mobile communication network), as it can be assured that the specific packet network connection, opened by the user equipment and using an access point name for home operator services for the transmission of home operator services data, is closed after a predetermined idle time interval, corresponding to the packet network connection idle timer information (i.e. to the corresponding value of the idle time interval of that idle timer information).

According to the present invention, in a first step, the packet network connection idle timer information is transmitted, by the mobile communication network, to the user equipment. This transmission from the mobile communication network (i.e. typically the home mobile communication network, perhaps via a visited mobile communication network, if applicable) to the user equipment could typically occur at any time, especially comparatively early, e.g., upon or during (first) activation of the user equipment with the (home) mobile communication network and/or even prior to the (first) activation of the user equipment with the (home) mobile communication network. However, this transmission (of the packet network connection idle timer information) from the mobile communication network to the user equipment might also occur at a later point in time, e.g., responsive to a current or anticipated increased network load of the home mobile communication network.

Furthermore according to the present invention, in a second step, partly during or subsequent to the first step, the specific packet network connection is activated or initialized for the transmission of home operator services data, and the transmission of the home operator services data is started. Typically, the specific packet network connection is activated or initialized for the transmission of home operator services data after the packet network connection idle timer information is transmitted, by the mobile communication network, to the user equipment (i.e. after completing the first step according to the present invention). However, the packet network connection idle timer information might be transmitted as part of the activation (or initialization) of the specific packet network connection for the transmission of home operator services data; hence, the specific packet network connection might be partly activated or initialized during the first step according to the present invention. During the second step according to the present invention - during the specific packet network connection being activated or initialized for the transmission of home operator services data, and the transmission of the home operator services data being started, the home operator services data are transmitted, e.g. call forwarding parameters changed or adapted or a multimedia message transmitted. Thereafter, in a third step and subsequent to the second step, - i.e. upon the transmission of the home operator services data being completed or terminated - the specific packet network connection is idle. According to the present invention, it is continuously or regularly checked whether the specific packet network connection stays idle for a period of time corresponding to the packet network connection idle timer information after completing or terminating the transmission of the home operator services data. Typically, a timer is started upon the transmission of the home operator services data being completed or terminated, and in case the time interval of the timer has elapsed, it is checked whether the specific packet network connection is still idle.

Subsequently, in a fourth step according to the present invention - in case that the specific packet network connection stayed idle for the period of time corresponding to the packet network connection idle timer information - the specific packet network connection is deactivated or closed (due to the timer having elapsed) by the user equipment, and hence network resources freed up for alternative use.

According to the present invention, it is preferred that during the third step, and prior to the fourth step - in case that after the transmission of the home operator services data being completed or terminated, a transmission of further home operator services data is started within the period of time corresponding to the packet network connection idle timer information after completing or terminating the transmission of the home operator services data -, it is checked whether the specific packet network connection stays idle for a period of time corresponding to the packet network connection idle timer information after completing or terminating the transmission of the further home operator services data.

Thereby, it is advantageously possible that, in case that the transmission of the further home operator services data starts within the period of time corresponding to the packet network connection idle timer information after completing or terminating the transmission of the home operator services data, the specific packet network connection stays open and/or activated such that the further home operator services data are able to be transmitted without the necessity to activate or initialize the specific packet network connection once more for the transmission of the further home operator services data (after having been activated or initialized for the transmission of the home operator services data). In other words: if during the idle time of the specific packet network connection, once the timer corresponding to the packet network connection idle timer information has not yet elapsed, there are further home operator services data to be transmitted using the specific packet network connection, the timer is stopped and started anew once the transmission of the further home operator services data is completed or terminated (i.e. in this case, the further home operator services data are taking the role of the prior home operator services data which means that - if still further home operator services data need to be transmitted while the specific packet network connection being idle (and after the initial "further" home operator services data have been transmitted), the timer is again stopped and started anew once the transmission of the still further home operator services data is completed or terminated).

According to a further embodiment of the present invention, it is also possible and preferred that the packet network connection idle timer information is transmitted to the user equipment by means of at least one out of the following transport protocols:
- by means of an extended activation or initialization of the specific packet network connection,
- as part of the protocol used for transmitting the home operator service data, especially XCAP (XML(extensible markup language) configuration access protocol),
- as part of a management object, especially a management object for Ut/XCAP,
- open mobile alliance device management (OMA DM), especially based on the hypertext transfer protocol, and especially using a fully qualified domain name,
- rich communication services (RCS), especially based on the hypertext transfer protocol, and especially using a fully qualified domain name
- by means of late customization of the user equipment.

According to the present invention, it is thereby advantageously possible that the packet network connection idle timer information is transmitted in an effective and reliable manner.

According to the present invention it is furthermore preferred that the home operator services data corresponds to all services that use the access point name for home operator services, especially supplementary service settings such as configuration using XCAP/Ut and/or MMS.

According to a further preferred embodiment of the present invention, the packet network connection idle timer information is transmitted to the user equipment and applied by the user equipment irrespective of the type of access of the user equipment to the mobile communication network, especially 3G access, LTE access, direct WiFi access, EPC integrated WiFi access, or 5G access.

According to the present invention, it is thereby advantageously possible to use the packet network connection idle timer information in a plurality of situations and in the context of a plurality of different access technologies used.

Furthermore, the present invention relates to a system for an improved usage of a user equipment being connected to a mobile communication network via a radio access network of or associated with the mobile communication network, the system comprising the mobile communication network and the user equipment,
wherein the user equipment is enabled to use a specific packet network connection, being a packet network connection using an access point name for home operator services for the transmission of home operator services data,
wherein the user equipment comprises or receives a packet network connection idle timer information,
wherein the system is configured such that:
   - the packet network connection idle timer information is transmitted, by the mobile communication network, to the user equipment,
   - the specific packet network connection is activated or initialized for the transmission of home operator services data, and the transmission of the home operator services data is started,
   - upon the transmission of the home operator services data being completed or terminated - the specific packet network connection is idle, and it is checked whether the specific packet network connection stays idle for a period of time corresponding to the packet network connection idle timer information after completing or terminating the transmission of the home operator services data,
   - in case that the specific packet network connection stayed idle for a period of time corresponding to the packet network connection idle timer information - the specific packet network connection is deactivated or closed by the user equipment.

Thereby, it is advantageously possible to provide a system such that the user equipment knows about the packet network connection idle timer information to be applied.

Furthermore, the present invention relates to a mobile communication network for an improved usage of a user equipment being connected to the mobile communication network via a radio access network of or associated with the mobile communication network,
wherein the mobile communication network is provided such that the user equipment is enabled to use a specific packet network connection, being a packet network connection using an access point name for home operator services for the transmission of home operator services data,
wherein the mobile communication network is provided such that the user equipment comprises or receives a packet network connection idle timer information,
wherein the mobile communication network is furthermore configured such that:
   - the packet network connection idle timer information is transmitted, by the mobile communication network, to the user equipment,
   - the specific packet network connection is activated or initialized for the transmission of home operator services data, and the transmission of the home operator services data is started,
   - upon the transmission of the home operator services data being completed or terminated - the specific packet network connection is idle, and it is checked whether the specific packet network connection stays idle for a period of time corresponding to the packet network connection idle timer information after completing or terminating the transmission of the home operator services data,
   - in case that the specific packet network connection stayed idle for a period of time corresponding to the packet network connection idle timer information - the specific packet network connection is deactivated or closed by the user equipment.

Thereby, it is advantageously possible to provide a (home) mobile communication network such that the user equipment knows about the packet network connection idle timer information to be applied.

Furthermore, the present invention relates to a user equipment for an improved usage of a mobile communication network to which the user equipment is connected via a radio access network of or associated with the mobile communication network,
wherein the user equipment is enabled to use a specific packet network connection, being a packet network connection using an access point name for home operator services for the transmission of home operator services data,
wherein the user equipment comprises or receives a packet network connection idle timer information,
wherein the user equipment is configured such that:
   - the packet network connection idle timer information is received by the user equipment from the mobile communication network,
   - the specific packet network connection is activated or initialized for the transmission of home operator services data, and the transmission of the home operator services data is started,
   - upon the transmission of the home operator services data being completed or terminated - the specific packet network connection is idle, and it is checked whether the specific packet network connection stays idle for a period of time corresponding to the packet network connection idle timer information after completing or terminating the transmission of the home operator services data,
   - in case that the specific packet network connection stayed idle for a period of time corresponding to the packet network connection idle timer information - the specific packet network connection is deactivated or closed by the user equipment.

Thereby, it is advantageously possible to provide a user equipment such it knows about the packet network connection idle timer information to be applied.

According to the present invention and especially with respect to the inventive system as well as with respect to the inventive mobile communication network and the inventive user equipment, it is still further preferred that - in case that after the transmission of the home operator services data being completed or terminated, a transmission of further home operator services data is started within the period of time corresponding to the packet network connection idle timer information after completing or terminating the transmission of the home operator services data -, it is checked whether the specific packet network connection stays idle for a period of time corresponding to the packet network connection idle timer information after completing or terminating the transmission of the further home operator services data.

Thereby, it is advantageously possible that, in case that the transmission of the further home operator services data starts within the period of time corresponding to the packet network connection idle timer information after completing or terminating the transmission of the home operator services data, the specific packet network connection stays open and/or activated such that the further home operator services data are able to be transmitted without the necessity to activate or initialize the specific packet network connection once more for the transmission of the further home operator services data (after having been activated or initialized for the transmission of the home operator services data).

Additionally, the present invention relates to a computer-readable medium and a program comprising a computer readable program code which, when executed on a computer or on a network node of a (home) mobile communication network or on a network node of a visited mobile communication network, or in part on the network node of the (home) mobile communication network and/or in part on the network node of the visited mobile communication network, causes the computer or the network node of the (home) mobile communication network or the network node of the visited mobile communication network to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

**Figure 1** schematically illustrates a mobile communication network, and a user equipment according to the present invention.
**Figure 2** schematically illustrates a user equipment establishing a specific packet network connection using an access point name for home operator services to the home mobile communication network for the transmission of home operator services data.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

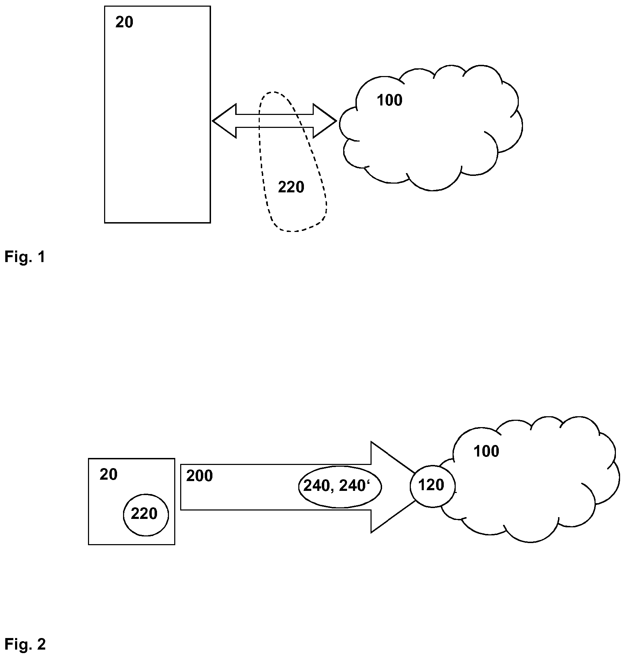

In Figure 1, a mobile communication network 100 (typically a home mobile communication network 100), and a user equipment 20 according to the present invention are schematically shown. A corresponding inventive system comprises the user equipment 20 and the (home) mobile communication network 100.

In Figure 2, a user equipment establishing a specific packet network connection 200 using an access point name for home operator services 120 to the home mobile communication network 100 for the transmission of home operator services data 240 is schematically shown.

According to the present invention and in case that the user equipment 20 is connected to a mobile communication network 100 (via a radio access network of or associated with the mobile communication network 100, however, the radio access network is not specifically shown in Figure 1), the user equipment 20 is enabled to use a specific packet network connection 200 being a packet network connection using an access point name for home operator services 120 for the transmission of home operator services data 240.

In order to reliably close such a specific packet network connection 200 (towards the access point name for home operator services 120), the user equipment 20 receives a packet network connection idle timer information 220 (cf. Figure 1). This ensures a network defined maximum time of idle operation (or existence) of such an open packet network connection 200.

According to the present invention, the method comprises the following steps:
- in a first step, the packet network connection idle timer information 220 is transmitted, by the mobile communication network 100, to the user equipment 20,
- in a second step, partly during or subsequent to the first step, the specific packet network connection 200 is activated or initialized for the transmission of home operator services data 240, and the transmission of the home operator services data 240 is started,
- in a third step, subsequent to the second step, - upon the transmission of the home operator services data 240 being completed or terminated - the specific packet network connection 200 is idle, and it is checked whether the specific packet network connection 200 stays idle for a period of time corresponding to the packet network connection idle timer information 220 after completing or terminating the transmission of the home operator services data 240,
- in a fourth step, subsequent to the third step, - in case that the specific packet network connection 200 stayed idle for a period of time corresponding to the packet network connection idle timer information 220 - the specific packet network connection 200 is deactivated or closed by the user equipment.

Hence, in case that the specific packet network connection 200 stays open and idle for a sufficient period of time, the respective connection 200 is closed in a manner prescribed to the user equipment 20 by the mobile communication network 100.

If during the idle time of the specific packet network connection 200 (and once the timer corresponding to the packet network connection idle timer information 220 has not yet elapsed), there are further home operator services data 240' to be transmitted (using that specific packet network connection 200 using the access point name for home operator services 120), then the specific packet network connection 200 stays open or activated which corresponds to the timer (corresponding to the packet network connection idle timer information 220) being interupted and started anew once the transmission of the further home operator services data 240' is completed or terminated. In this case, the further home operator services data 240' are taking the role of the prior home operator services data 240 which means that - if still further home operator services data need to be transmitted while the specific packet network connection being idle (and after the initial "further" home operator services data have been transmitted), the timer is again stopped and started anew once the transmission of the still further home operator services data is completed or terminated).

According to the present invention, the packet network connection timer information 220 especially corresponds to a special "home operator services on demand timer" which is introduced in the user equipment 20, and which could also be defined as follows:
start/refresh event := transaction via access point name for home operator services
expiring time:= configuration parameter set during late customization and/or configuration.

After being switched on, the user equipment 20 uses the expiring time of the packet network connection timer information 220 or "home operator services on demand timer" configured typically by the mobile communication network 100 or by the operator of the mobile communication network 100, especially by means of late customization or configuration.

If the user equipment 20 initiates a transaction that requires (a packet network connection 200 of) the access point name for home operator services 120 (such as, e.g., changes in the call forwarding settings and/or sending or receiving of multimedia messages (MMS)), the user equipment 20 opens the access point name for home operator services 120 and starts the timer corresponding to the packet network connection timer information 220 (or "home operator services on demand timer"). After the transactions (i.e. after the transmission of the home operator services data 240 or further home operator services data 240' being completed or terminated), the user equipment 20 keeps the access point name for home operator services 120 open for the indicated time (or time interval). The packet network connection timer information 220 (or "home operator services on demand timer") is refreshed if a subsequent transaction has been made before the timer expired. The access point name for home operator services 120 is closed after the timer expired.

As a result according to the present invention, the operator (of the mobile communication network 100) can save network resources by controlling how long the user equipments 20 keeps the access point name for home operator services 120 (i.e. the corresponding specific packet network connection 200) open.

According to the present invention, the packet network connection timer information 220 (or home operator services on demand-timer) can be defined as a new parameter in the management object for Ut/XCAP. The management object can be transported to the user equipment 20 via different means, e.g. OMA DM or RCC.14 HTTP based configuration.

The packet network connection timer information 220 (or home operator services on demand-timer) can also be defined as a parameter for late customization, which allows the operator (of the mobile communication network 100) to provide the vendors of the user equipment 20 the values of different parameters. The procedure for late customization is, e.g., defined in TS.32 and the VoLTE relevant parameters in IR.92.

According to the present invention, it is especially preferred that the packet network connection timer information 220 (or home operator services on demand-timer) is coupled with the access point name for home operator services 120. Another possibility according to the present invention is to make the packet network connection timer information 220 a property of the access point name, which the user equipment 20 receives from the mobile communication network 100 during the attach procedure. Especially according to an embodiment or a variant of the present invention, the ATTACH ACCEPT message is modified (for LTE access), especially extended, to carry the HOS on demand-timer. Furthermore, for VoWiFi attach procedure, the IKEv2 protocol could be extended to carry the packet network connection timer information 220 (or home operator services on demand-timer information).

According to the present invention, the access point name for home operator services 120 can be the internet access point name, e.g. called "home operator services" or another access point name configured by the operator (of the mobile communication network 100). The procedure according to the present invention can be applied to all services that use the access point name for home operator services 120, especially supplementary service settings (XCAP/Ut) and MMS.

## Claims

1. Method for an improved usage of a user equipment (20) being connected to a mobile communication network (100) via a radio access network of or associated with the mobile communication network (100),
wherein the user equipment (20) is enabled to use a specific packet network connection (200), being a packet network connection using an access point name for home operator services (120) for the transmission of home operator services data (240),
wherein the user equipment (20) receives a packet network connection idle timer information (220),
wherein the method comprises the following steps:
- - in a first step, the packet network connection idle timer information (220) is transmitted, by the mobile communication network (100), to the user equipment (20),
- - in a second step, partly during or subsequent to the first step, the specific packet network connection (200) is activated or initialized for the transmission of home operator services data (240), and the transmission of the home operator services data (240) is started,
- - in a third step, subsequent to the second step, - upon the transmission of the home operator services data (240) being completed or terminated - the specific packet network connection (200) is idle, and it is checked whether the access point name for home operator services (120) is not used by the user equipment (20) for the transmission of further home operator services data (240) for a period of time corresponding to the packet network connection idle timer information (220) after completing or terminating the transmission of the home operator services data (240),
- - in a fourth step, subsequent to the third step, - in case that the access point name for home operator services (120) was not used by the user equipment (20) for the transmission of further home operator services data (240) for a period of time corresponding to the packet network connection idle timer information (220) - the specific packet network connection (200) is deactivated or closed by the user equipment (20).

2. Method according to claim 1, wherein during the third step, and prior to the fourth step - in case that after the transmission of the home operator services data (240) being completed or terminated, a transmission of further home operator services data (240') is started within the period of time corresponding to the packet network connection idle timer information (220) after completing or terminating the transmission of the home operator services data (240) -, it is checked whether the access point name for home operator services (120) is not used by the user equipment (20) for the transmission of additional further home operator services data (240) for a period of time corresponding to the packet network connection idle timer information (220) after completing or terminating the transmission of the further home operator services data (240').

3. Method according to one of the preceding claims, wherein the packet network connection idle timer information (220) is transmitted to the user equipment (20) by means of at least one out of the following transport protocols:
- - by means of an extended activation or initialization of the specific packet network connection (200),
- - as part of the protocol used for transmitting the home operator service data, especially XCAP (XML(extensible markup language) configuration access protocol),
- - as part of a management object, especially a management object for Ut/XCAP,
- - open mobile alliance device management (OMA DM), especially based on the hypertext transfer protocol, and especially using a fully qualified domain name,
- - rich communication services (RCS), especially based on the hypertext transfer protocol, and especially using a fully qualified domain name
- - by means of late customization of the user equipment (20).

4. Method according to one of the preceding claims, wherein the home operator services data (240) corresponds to all services that use the access point name for home operator services (120), especially supplementary service settings such as configurable using XCAP/Ut and/or MMS.

5. Method according to one of the preceding claims, wherein the packet network connection idle timer information (220) is transmitted to the user equipment (20) and applied by the user equipment (20) irrespective of the type of access of the user equipment (20) to the mobile communication network (100), especially 3G access, LTE access, direct WiFi access, EPC integrated WiFi access, or 5G access.

6. System for an improved usage of a user equipment (20) being connected to a mobile communication network (100) via a radio access network of or associated with the mobile communication network (100), the system comprising the mobile communication network (100) and the user equipment (20),
wherein the user equipment (20) is enabled to use a specific packet network connection (200), being a packet network connection using an access point name for home operator services (120) for the transmission of home operator services data (240),
wherein the user equipment (20) receives a packet network connection idle timer information (220),
wherein the system is configured such that:
- - the packet network connection idle timer information (220) is transmitted, by the mobile communication network (100), to the user equipment (20),
- - the specific packet network connection (200) is activated or initialized for the transmission of home operator services data (240), and the transmission of the home operator services data (240) is started,
- - upon the transmission of the home operator services data (240) being completed or terminated - the specific packet network connection (200) is idle, and it is checked whether the access point name for home operator services (120) is not used by the user equipment (20) for the transmission of further home operator services data (240) for a period of time corresponding to the packet network connection idle timer information (220) after completing or terminating the transmission of the home operator services data (240),
- - in case that the access point name for home operator services (120) was not used by the user equipment (20) for the transmission of further home operator services data (240) for a period of time corresponding to the packet network connection idle timer information (220) - the specific packet network connection (200) is deactivated or closed by the user equipment (20).

7. Mobile communication network for an improved usage of a user equipment (20) being connected to the mobile communication network (100) via a radio access network of or associated with the mobile communication network (100),
wherein the mobile communication network (100) is provided such that the user equipment (20) is enabled to use a specific packet network connection (200), being a packet network connection using an access point name for home operator services (120) for the transmission of home operator services data (240),
wherein the mobile communication network (100) is provided such that the user equipment (20) receives a packet network connection idle timer information (220),
wherein the mobile communication network (100) is furthermore configured such that:
- - the packet network connection idle timer information (220) is transmitted, by the mobile communication network (100), to the user equipment (20),
- - the specific packet network connection (200) is activated or initialized for the transmission of home operator services data (240), and the transmission of the home operator services data (240) is started,
- - upon the transmission of the home operator services data (240) being completed or terminated - the specific packet network connection (200) is idle, and it is checked whether the access point name for home operator services (120) is not used by the user equipment (20) for the transmission of further home operator services data (240) for a period of time corresponding to the packet network connection idle timer information (220) after completing or terminating the transmission of the home operator services data (240),
- - in case that the access point name for home operator services (120) was not used by the user equipment (20) for the transmission of further home operator services data (240) for a period of time corresponding to the packet network connection idle timer information (220) - the specific packet network connection (200) is deactivated or closed by the user equipment (20).

8. User equipment (20) for an improved usage of a mobile communication network (100) to which the user equipment (20) is connected via a radio access network of or associated with the mobile communication network (100),
wherein the user equipment (20) is enabled to use a specific packet network connection (200), being a packet network connection using an access point name for home operator services (120) for the transmission of home operator services data (240),
wherein the user equipment (20) receives a packet network connection idle timer information (220),
wherein the user equipment (20) is configured such that:
- - the packet network connection idle timer information (220) is received by the user equipment (20) from the mobile communication network (100),
- - the specific packet network connection (200) is activated or initialized for the transmission of home operator services data (240), and the transmission of the home operator services data (240) is started,
- - upon the transmission of the home operator services data (240) being completed or terminated - the specific packet network connection (200) is idle, and it is checked whether the access point name for home operator services (120) is not used by the user equipment (20) for the transmission of further home operator services data (240) for a period of time corresponding to the packet network connection idle timer information (220) after completing or terminating the transmission of the home operator services data (240),
- - in case that the access point name for home operator services (120) was not used by the user equipment (20) for the transmission of further home operator services data (240) for a period of time corresponding to the packet network connection idle timer information (220) - the specific packet network connection (200) is deactivated or closed by the user equipment (20).

9. System according to claim 8, mobile communication network (100) according to claim 7 or user equipment (20) according to claim 8, wherein during the second step, and prior to the third step - in case that after the transmission of the home operator services data (240) being completed or terminated, a transmission of further home operator services data (240') is started within the period of time corresponding to the packet network connection idle timer information (220) after completing or terminating the transmission of the home operator services data (240) -, it is checked whether the access point name for home operator services (120) is not used by the user equipment (20) for the transmission of additional further home operator services data (240) for a period of time corresponding to the packet network connection idle timer information (220) after completing or terminating the transmission of the further home operator services data (240').

10. Program comprising a computer readable program code which, when executed on a computer or on a network node of a mobile communication network (100) or on a user equipment (20), or in part on the network node of the mobile communication network (100) and in part on the user equipment (20), causes the computer or the network node of the mobile communication network (100) or the user equipment (20) to perform a method according to one of claims 1 to 5.

11. Computer-readable medium comprising instructions which when executed on a computer or on a network node of a mobile communication network (100) or on a user equipment (20), or in part on the network node of the mobile communication network (100) and in part on the user equipment (20), causes the computer or the network node of the mobile communication network (100) or the user equipment (20) to perform a method according to one of claims 1 to 5.

## Patentansprüche

1. Verfahren für eine verbesserte Nutzung einer Benutzerausrüstung (20), die mit einem Mobilkommunikationsnetz (100) über ein Funkzugangsnetz verbunden ist, das Teil des Mobilkommunikationsnetzes (100) ist oder mit dem Mobilkommunikationsnetz (100) verknüpft ist,
wobei die Benutzerausrüstung (20) dazu eingerichtet ist, eine spezifische Paketnetzverbindung (200) zu verwenden, die eine Paketnetzverbindung ist, die einen Zugangspunktnamen für Heimbetreiberdienste (120) für die Übertragung von Heimbetreiberdienstdaten (240) verwendet, wobei die Benutzerausrüstung (20) eine Paketnetzverbindungs-Leerlaufzeitinformation (220) empfängt,
wobei das Verfahren die folgenden Schritte umfasst:
- in einem ersten Schritt wird die Paketnetzverbindungs-Leerlaufzeitinformation (220) durch das Mobilkommunikationsnetz (100) an die Benutzerausrüstung (20) übertragen,
- in einem zweiten Schritt, der teilweise während des ersten Schrittes oder im Anschluss an den ersten Schritt erfolgt, wird die spezifische Paketnetzverbindung (200) für die Übertragung von Heimbetreiberdienstdaten (240) aktiviert oder initialisiert und die Übertragung der Heimbetreiberdienstdaten (240) wird gestartet,
- in einem dritten Schritt, im Anschluss an den zweiten Schritt, nachdem die Übertragung der Heimbetreiberdienstdaten (240) vollendet oder abgebrochen wurde, ist die spezifische Paketnetzverbindung (200) im Leerlauf, und es wird geprüft, ob der Zugangspunktname für Heimbetreiberdienste (120) für einen Zeitraum, welcher der Paketnetzverbindungs-Leerlaufzeitinformation (220) nach Vollendung oder Abbruch der Übertragung der Heimbetreiberdienstdaten (240) entspricht, nicht durch die Benutzerausrüstung (20) für die Übertragung weiterer Heimbetreiberdienstdaten (240) verwendet wird,
- in einem vierten Schritt, im Anschluss an den dritten Schritt, wird für den Fall, dass der Zugangspunktname für Heimbetreiberdienste (120) für einen Zeitraum, welcher der Paketnetzverbindungs-Leerlaufzeitinformation (220) entspricht, nicht durch die Benutzerausrüstung (20) für die Übertragung weiterer Heimbetreiberdienstdaten (240) verwendet wurde, die spezifische Paketnetzverbindung (200) durch die Benutzereinrichtung (20) deaktiviert oder geschlossen.

2. Verfahren nach Anspruch 1, wobei während des dritten Schrittes und vor dem vierten Schritt für den Fall, dass nach Vollendung oder Abbruch der Übertragung der Heimnetzbetreiber-Dienstdaten (240) eine Übertragung weiterer Heimbetreiber-Dienstdaten (240') innerhalb des Zeitraums begonnen wird, welcher der Paketnetzverbindungs-Leerlaufzeitinformation (220) nach Vollendung oder Abbruch der Übertragung der Heimbetreiberdienstdaten (240) entspricht, geprüft wird, ob der Zugangspunktname für Heimbetreiber-Dienste (120) für einen Zeitraum, welcher der Paketnetzverbindungs-Leerlaufzeitinformation (220) nach Vollendung oder Abbruch der Übertragung der weiteren Heimbetreiber-Dienstdaten (240') entspricht, nicht durch die Benutzereinrichtung (20) für die Übertragung zusätzlicher weiterer Heimbetreiber-Dienstdaten (240) verwendet wird.

3. Verfahren nach einem der vorangehenden Ansprüche, wobei die Paketnetzverbindungs-Leerlaufzeitinformation (220) mittels mindestens eines der folgenden Transportprotokolle an die Benutzerausrüstung (20) gesendet wird:
- mittels einer erweiterten Aktivierung oder Initialisierung der spezifischen Paketnetzverbindung (200),
- als Teil des Protokolls, das für die Übertragung der Heimbetreiber-Dienstdaten verwendet wird, insbesondere XCAP (XML (Extensible Markup Language) Configuration Access Protocol),
- als Teil eines Managementobjekts, insbesondere eines Managementobjekts für Ut/XCAP,
- Open Mobile Alliance Device Management (OMA DM), insbesondere auf Basis des Hypertext-Transfer-Protokolls, und insbesondere unter Verwendung eines vollständig qualifizierten Domänennamens,
- Rich Communication Services (RCS), insbesondere auf Basis des Hypertext-Transfer-Protokolls, und insbesondere unter Verwendung eines vollständig qualifizierten Domänennamens,
- mittels einer nachträglichen spezifischen Anpassung der Benutzerausrüstung (20).

4. Verfahren nach einem der vorangehenden Ansprüche, wobei die Heimbetreiberdienstdaten (240) allen Diensten entsprechen, die den Zugangspunktnamen für Heimbetreiberdienste (120) verwenden, insbesondere zusätzliche Diensteinstellungen, wie zum Beispiel "konfigurierbar über XCAP/Ut und/oder MMS".

5. Verfahren nach einem der vorangehenden Ansprüche, wobei die Paketnetzverbindungs-Leerlaufzeitinformation (220) an die Benutzerausrüstung (20) übertragen und durch die Benutzerausrüstung (20) unabhängig von der Art des Zugangs der Benutzerausrüstung (20) zu dem Mobilkommunikationsnetz (100), insbesondere 3G-Zugang, LTE-Zugang, direkter WiFi-Zugang, EPC-integrierter WiFi-Zugang oder 5G-Zugang, angewendet wird.

6. System für eine verbesserte Nutzung einer Benutzerausrüstung (20), die mit einem Mobilkommunikationsnetz (100) über ein Funkzugangsnetz verbunden ist, das Teil des Mobilkommunikationsnetzes (100) ist oder mit dem Mobilkommunikationsnetz (100) verknüpft ist, wobei das System das Mobilkommunikationsnetz (100) und die Benutzerausrüstung (20) umfasst,
wobei die Benutzerausrüstung (20) dazu eingerichtet ist, eine spezifische Paketnetzverbindung (200) zu verwenden, die eine Paketnetzverbindung ist, die einen Zugangspunktnamen für Heimbetreiberdienste (120) für die Übertragung von Heimbetreiberdienstdaten (240) verwendet, wobei die Benutzerausrüstung (20) eine Paketnetzverbindungs-Leerlaufzeitinformation (220) empfängt,
wobei das System so ausgebildet ist, dass:
- die Paketnetzverbindungs-Leerlaufzeitinformation (220) wird durch das Mobilkommunikationsnetz (100) an die Benutzerausrüstung (20) übertragen,
- die spezifische Paketnetzverbindung (200) wird für die Übertragung von Heimbetreiberdienstdaten (240) aktiviert oder initialisiert, und die Übertragung der Heimbetreiberdienstdaten (240) wird gestartet,
- nachdem die Übertragung der Heimbetreiberdienstdaten (240) vollendet oder abgebrochen wurde, ist die spezifische Paketnetzverbindung (200) im Leerlauf, und es wird geprüft, ob der Zugangspunktname für Heimbetreiberdienste (120) für einen Zeitraum, welcher der Paketnetzverbindungs-Leerlaufzeitinformation (220) nach Vollendung oder Abbruch der Übertragung der Heimbetreiberdienstdaten (240) entspricht, nicht durch die Benutzerausrüstung (20) für die Übertragung weiterer Heimbetreiberdienstdaten (240) verwendet wird,
- für den Fall, dass der Zugangspunktname für Heimbetreiberdienste (120) für einen Zeitraum, welcher der Paketnetzverbindungs-Leerlaufzeitinformation (220) entspricht, nicht durch die Benutzerausrüstung (20) für die Übertragung weiterer Heimbetreiberdienstdaten (240) verwendet wurde, wird die spezifische Paketnetzverbindung (200) durch die Benutzereinrichtung (20) deaktiviert oder geschlossen.

7. Mobilkommunikationsnetz für eine verbesserte Nutzung einer Benutzerausrüstung (20), die mit dem Mobilkommunikationsnetz (100) über ein Funkzugangsnetz verbunden ist, das Teil des Mobilkommunikationsnetzes (100) ist oder mit dem Mobilkommunikationsnetz (100) verknüpft ist,
wobei das Mobilkommunikationsnetz (100) so ausgebildet ist, dass die Benutzerausrüstung (20) in die Lage versetzt wird, eine spezifische Paketnetzverbindung (200) zu verwenden,
die eine Paketnetzverbindung ist, die einen Zugangspunktnamen für Heimbetreiberdienste (120) für die Übertragung von Heimbetreiberdienstdaten (240) verwendet, wobei das Mobilkommunikationsnetz (100) so ausgebildet ist, dass die Benutzerausrüstung (20) eine Paketnetzverbindungs-Leerlaufzeitinformation (220) empfängt,
wobei das Mobilkommunikationsnetz (100) darüber hinaus so ausgebildet ist, dass:
- die Paketnetzverbindungs-Leerlaufzeitinformation (220) durch das Mobilkommunikationsnetz (100) an die Benutzerausrüstung (20) übertragen wird,
- die spezifische Paketnetzverbindung (200) für die Übertragung von Heimbetreiberdienstdaten (240) aktiviert oder initialisiert wird, und die Übertragung der Heimbetreiberdienstdaten (240) gestartet wird,
- nachdem die Übertragung der Heimbetreiberdienstdaten (240) vollendet oder abgebrochen wurde, die spezifische Paketnetzverbindung (200) im Leerlauf ist, und es geprüft wird, ob der Zugangspunktname für Heimbetreiberdienste (120) für einen Zeitraum, welcher der Paketnetzverbindungs-Leerlaufzeitinformation (220) nach Vollendung oder Abbruch der Übertragung der Heimbetreiberdienstdaten (240) entspricht, nicht durch die Benutzerausrüstung (20) für die Übertragung weiterer Heimbetreiberdienstdaten (240) verwendet wird,
- für den Fall, dass der Zugangspunktname für Heimbetreiberdienste (120) für einen Zeitraum, welcher der Paketnetzverbindungs-Leerlaufzeitinformation (220) entspricht, nicht durch die Benutzerausrüstung (20) für die Übertragung weiterer Heimbetreiberdienstdaten (240) verwendet wurde, die spezifische Paketnetzverbindung (200) durch die Benutzereinrichtung (20) deaktiviert oder geschlossen wird.

8. Benutzerausrüstung (20) für eine verbesserte Nutzung eines Mobilkommunikationsnetzes (100), mit dem die Benutzerausrüstung (20) über ein Funkzugangsnetz verbunden ist, das Teil des Mobilkommunikationsnetzes (100) ist oder mit dem Mobilkommunikationsnetz (100) verknüpft ist, wobei die Benutzerausrüstung (20) in die Lage versetzt wird, eine spezifische Paketnetzverbindung (200) zu verwenden, die eine Paketnetzverbindung ist, die einen Zugangspunktnamen für Heimbetreiberdienste (120) für die Übertragung von Heimbetreiberdienstdaten (240) verwendet, wobei die Benutzerausrüstung (20) eine Paketnetzverbindungs-Leerlaufzeitinformation (220) empfängt,
wobei die Benutzerausrüstung (20) so ausgebildet ist, dass:
- die Paketnetzverbindungs-Leerlaufzeitinformation (220) von dem Mobilkommunikationsnetz (100) kommend durch die Benutzerausrüstung (20) empfangen wird,
- die spezifische Paketnetzverbindung (200) für die Übertragung von Heimbetreiberdienstdaten (240) aktiviert oder initialisiert wird, und die Übertragung der Heimbetreiberdienstdaten (240) gestartet wird,
- nachdem die Übertragung der Heimbetreiberdienstdaten (240) vollendet oder abgebrochen wurde, die spezifische Paketnetzverbindung (200) im Leerlauf ist, und es geprüft wird, ob der Zugangspunktname für Heimbetreiberdienste (120) für einen Zeitraum, welcher der Paketnetzverbindungs-Leerlaufzeitinformation (220) nach Vollendung oder Abbruch der Übertragung der Heimbetreiberdienstdaten (240) entspricht, nicht durch die Benutzerausrüstung (20) für die Übertragung weiterer Heimbetreiberdienstdaten (240) verwendet wird,
- für den Fall, dass der Zugangspunktname für Heimbetreiberdienste (120) für einen Zeitraum, welcher der Paketnetzverbindungs-Leerlaufzeitinformation (220) entspricht, nicht durch die Benutzerausrüstung (20) für die Übertragung weiterer Heimbetreiberdienstdaten (240) verwendet wurde, die spezifische Paketnetzverbindung (200) durch die Benutzereinrichtung (20) deaktiviert oder geschlossen wird.

9. System nach Anspruch 8, Mobilkommunikationsnetz (100) nach Anspruch 7 oder Benutzerausrüstung (20) nach Anspruch 8, wobei während des zweiten Schrittes und vor dem dritten Schritt für den Fall, dass nach Vollendung oder Abbruch der Übertragung der Heimnetzbetreiber-Dienstdaten (240) eine Übertragung weiterer Heimbetreiber-Dienstdaten (240') innerhalb des Zeitraums begonnen wird, welcher der Paketnetzverbindungs-Leerlaufzeitinformation (220) nach Vollendung oder Abbruch der Übertragung der Heimbetreiberdienstdaten (240) entspricht, geprüft wird, ob der Zugangspunktname für Heimbetreiber-Dienste (120) für einen Zeitraum, welcher der Paketnetzverbindungs-Leerlaufzeitinformation (220) nach Vollendung oder Abbruch der Übertragung der weiteren Heimbetreiber-Dienstdaten (240') entspricht, nicht durch die Benutzereinrichtung (20) für die Übertragung zusätzlicher weiterer HeimbetreiberDienstdaten (240) verwendet wird.

10. Programm, umfassend einen computerlesbaren Programmcode, der, wenn er auf einem Computer oder in einem Netzknoten eines Telekommunikationsnetzes (100) oder in einer Benutzerausrüstung (20) oder teilweise in dem Netzknoten des Mobilkommunikationsnetzes (100) und teilweise in der Benutzerausrüstung (20) ausgeführt wird, den Computer oder den Netzknoten des Telekommunikationsnetzes (100) oder die erste Benutzerausrüstung (20) veranlasst, ein Verfahren nach einem der Ansprüche 1 bis 5 auszuführen.

11. Computerlesbares Medium, umfassend Instruktionen, die, wenn sie auf einem Computer oder in einem Netzknoten eines Mobilkommunikationsnetzes (100) oder in einer Benutzerausrüstung (20) oder teilweise in dem Netzknoten des Mobilkommunikationsnetzes (100) und teilweise in der Benutzerausrüstung (20) ausgeführt werden, den Computer oder den Netzknoten des Mobilkommunikationsnetzes (100) oder die Benutzerausrüstung (20) veranlassen, ein Verfahren nach einem der Ansprüche 1 bis 5 durchzuführen.

## Revendications

1. Procédé permettant d'améliorer l'utilisation d'un équipement d'utilisateur (20) qui est connecté à un réseau de communication mobile (100) par l'intermédiaire d'un réseau d'accès radioélectrique du réseau de communication mobile (100) ou associé à celui-ci,
dans lequel l'équipement d'utilisateur (20) est autorisé à utiliser une connexion de réseau en mode paquet spécifique (200) qui est une connexion de réseau en mode paquet utilisant un nom de point d'accès pour des services de l'opérateur de rattachement (120) aux fins de la transmission de données de services de l'opérateur de rattachement (240),
dans lequel l'équipement d'utilisateur (20) reçoit une information de temporisation de repos de connexion de réseau en mode paquet (220),
dans lequel le procédé comprend les étapes suivantes :
- dans une première étape, l'information de temporisation de repos de connexion de réseau en mode paquet (220) est transmise, par le réseau de communication mobile (100), à l'équipement d'utilisateur (20),
- dans une deuxième étape, en partie pendant ou après la première étape, la connexion de réseau en mode paquet spécifique (200) est activée ou initialisée pour la transmission de données de services de l'opérateur de rattachement (240), et la transmission des données de services de l'opérateur de rattachement (240) est lancée,
- dans une troisième étape, postérieure à la deuxième étape - lors de l'achèvement ou de l'arrêt de la transmission des données de services de l'opérateur de rattachement (240) - la connexion de réseau en mode paquet spécifique (200) est au repos et il est vérifié que le nom de point d'accès pour les services de l'opérateur de rattachement (120) n'est pas utilisé par l'équipement d'utilisateur (20) pour la transmission de données supplémentaires de services de l'opérateur de rattachement (240) pendant une période de temps correspondant à l'information de temporisation de repos de connexion de réseau en mode paquet (220) après l'achèvement ou l'arrêt de la transmission des données de services de l'opérateur de rattachement (240),
- dans une quatrième étape, postérieure à la troisième étape - dans le cas où le nom de point d'accès pour les services de l'opérateur de rattachement (120) n'a pas été utilisé par l'équipement d'utilisateur (20) pour la transmission de données supplémentaires de services de l'opérateur de rattachement (240) pendant une période de temps correspondant à l'information de temporisation de repos de connexion de réseau en mode paquet (220) - la connexion de réseau en mode paquet spécifique (200) est désactivée ou close par l'équipement d'utilisateur (20).

2. Procédé selon la revendication 1, dans lequel au cours de la troisième étape et avant la quatrième étape - dans le cas où après l'achèvement ou l'arrêt de la transmission des données de services de l'opérateur de rattachement (240), une transmission de données supplémentaires de services de l'opérateur de rattachement (240') est lancée au sein de la période de temps correspondant à l'information de temporisation de repos de connexion de réseau en mode paquet (220) après l'achèvement ou l'arrêt de la transmission des données de services de l'opérateur de rattachement (240) - il est vérifié que le nom de point d'accès pour les services de l'opérateur de rattachement (120) n'est pas utilisé par l'équipement d'utilisateur (20) pour la transmission d'autres données supplémentaires de services de l'opérateur de rattachement (240) pendant une période de temps correspondant à l'information de temporisation de repos de connexion de réseau en mode paquet (220) après l'achèvement ou l'arrêt de la transmission des données supplémentaires de services de l'opérateur de rattachement (240').

3. Procédé selon l'une des revendications précédentes, dans lequel l'information de temporisation de repos de connexion de réseau en mode paquet (220) est transmise à l'équipement d'utilisateur (20) au moyen d'au moins l'un des protocoles de transport suivants :
- au moyen d'une activation ou d'une initialisation étendue de la connexion de réseau en mode paquet spécifique (200),
- dans le cadre du protocole utilisé pour transmettre les données de services de l'opérateur de rattachement, en particulier du protocole d'accès de configuration du langage de balisage extensible (XML) XCAP,
- dans le cadre d'un objet de gestion, en particulier d'un objet de gestion pour Ut/XCAP,
- la gestion des dispositifs de l'OMA (Open Mobile Alliance Device Management) (OMA DM), en particulier sur la base du protocole de transfert hypertexte, et en particulier à l'aide d'un nom de domaine complet,
- Rich Communication Services (RCS), en particulier sur la base du protocole de transfert hypertexte, et en particulier à l'aide d'un nom de domaine complet,
- au moyen d'une personnalisation tardive de l'équipement d'utilisateur (20).

4. Procédé selon l'une des revendications précédentes, dans lequel les données de services de l'opérateur de rattachement (240) correspondent à tous les services qui utilisent le nom de point d'accès pour des services de l'opérateur de rattachement (120), en particulier des paramètres de services supplémentaires tels que configurables à l'aide de XCAP/Ut et/ou MMS.

5. Procédé selon l'une des revendications précédentes, dans lequel l'information de temporisation de repos de connexion de réseau en mode paquet (220) est transmise à l'équipement d'utilisateur (20) et appliquée par l'équipement d'utilisateur (20) quel que soit le type d'accès de l'équipement d'utilisateur (20) au réseau de communication mobile (100), en particulier un accès 3G, un accès LTE, un accès WiFi direct, un accès WiFi intégré dans l'EPC ou un accès 5G.

6. Système permettant d'améliorer l'utilisation d'un équipement d'utilisateur (20) qui est connecté à un réseau de communication mobile (100) par l'intermédiaire d'un réseau d'accès radioélectrique du réseau de communication mobile (100) ou associé à celui-ci, le système comprenant le réseau de communication mobile (100) et l'équipement d'utilisateur (20),
dans lequel l'équipement d'utilisateur (20) est autorisé à utiliser une connexion de réseau en mode paquet spécifique (200) qui est une connexion de réseau en mode paquet utilisant un nom de point d'accès pour des services de l'opérateur de rattachement (120) aux fins de la transmission de données de services de l'opérateur de rattachement (240),
dans lequel l'équipement d'utilisateur (20) reçoit une information de temporisation de repos de connexion de réseau en mode paquet (220),
dans lequel le système est configuré de telle sorte que :
- l'information de temporisation de repos de connexion de réseau en mode paquet (220) soit transmise, par le réseau de communication mobile (100), à l'équipement d'utilisateur (20),
- la connexion de réseau en mode paquet spécifique (200) soit activée ou initialisée pour la transmission de données de services de l'opérateur de rattachement (240), et que la transmission des données de services de l'opérateur de rattachement (240) soit lancée,
- lors de l'achèvement ou de l'arrêt de la transmission des données de services de l'opérateur de rattachement (240) - la connexion de réseau en mode paquet spécifique (200) soit au repos et qu'il soit vérifié que le nom de point d'accès pour les services de l'opérateur de rattachement (120) n'est pas utilisé par l'équipement d'utilisateur (20) pour la transmission de données supplémentaires de services de l'opérateur de rattachement (240) pendant une période de temps correspondant à l'information de temporisation de repos de connexion de réseau en mode paquet (220) après l'achèvement ou l'arrêt de la transmission des données de services de l'opérateur de rattachement (240),
- dans le cas où le nom de point d'accès pour les services de l'opérateur de rattachement (120) n'a pas été utilisé par l'équipement d'utilisateur (20) pour la transmission de données supplémentaires de services de l'opérateur de rattachement (240) pendant une période de temps correspondant à l'information de temporisation de repos de connexion de réseau en mode paquet (220) - la connexion de réseau en mode paquet spécifique (200) soit désactivée ou close par l'équipement d'utilisateur (20).

7. Réseau de communication mobile permettant d'améliorer l'utilisation d'un équipement d'utilisateur (20) qui est connecté au réseau de communication mobile (100) par l'intermédiaire d'un réseau d'accès radioélectrique du réseau de communication mobile (100) ou associé à celui-ci,
dans lequel le réseau de communication mobile (100) est établi de telle sorte que l'équipement d'utilisateur (20) soit autorisé à utiliser une connexion de réseau en mode paquet spécifique (200) qui est une connexion de réseau en mode paquet utilisant un nom de point d'accès pour des services de l'opérateur de rattachement (120) aux fins de la transmission de données de services de l'opérateur de rattachement (240),
dans lequel le réseau de communication mobile (100) est établi de telle sorte que l'équipement utilisateur (20) reçoive une information de temporisation de repos de connexion de réseau en mode paquet (220),
dans lequel le réseau de communication mobile (100) est configuré en outre de telle sorte que :
- l'information de temporisation de repos de connexion de réseau en mode paquet (220) soit transmise, par le réseau de communication mobile (100), à l'équipement d'utilisateur (20),
- la connexion de réseau en mode paquet spécifique (200) soit activée ou initialisée pour la transmission de données de services de l'opérateur de rattachement (240), et que la transmission des données de services de l'opérateur de rattachement (240) soit lancée,
- lors de l'achèvement ou de l'arrêt de la transmission des données de services de l'opérateur de rattachement (240) - la connexion de réseau en mode paquet spécifique (200) soit au repos et qu'il soit vérifié que le nom de point d'accès pour les services de l'opérateur de rattachement (120) n'est pas utilisé par l'équipement d'utilisateur (20) pour la transmission de données supplémentaires de services de l'opérateur de rattachement (240) pendant une période de temps correspondant à l'information de temporisation de repos de connexion de réseau en mode paquet (220) après l'achèvement ou l'arrêt de la transmission des données de services de l'opérateur de rattachement (240),
- dans le cas où le nom de point d'accès pour les services de l'opérateur de rattachement (120) n'a pas été utilisé par l'équipement d'utilisateur (20) pour la transmission de données supplémentaires de services de l'opérateur de rattachement (240) pendant une période de temps correspondant à l'information de temporisation de repos de connexion de réseau en mode paquet (220) - la connexion de réseau en mode paquet spécifique (200) soit désactivée ou close par l'équipement d'utilisateur (20).

8. Équipement d'utilisateur (20) permettant d'améliorer l'utilisation d'un réseau de communication mobile (100) auquel l'équipement d'utilisateur (20) est connecté par l'intermédiaire d'un réseau d'accès radioélectrique du réseau de communication mobile (100) ou associé à celui-ci,
dans lequel l'équipement d'utilisateur (20) est autorisé à utiliser une connexion de réseau en mode paquet spécifique (200) qui est une connexion de réseau en mode paquet utilisant un nom de point d'accès pour des services de l'opérateur de rattachement (120) aux fins de la transmission de données de services de l'opérateur de rattachement (240),
dans lequel l'équipement d'utilisateur (20) reçoit une information de temporisation de repos de connexion de réseau en mode paquet (220),
dans lequel l'équipement d'utilisateur (20) est configuré de telle sorte que :
- l'information de temporisation de repos de connexion de réseau en mode paquet (220) soit reçue par l'équipement d'utilisateur (20) en provenance du réseau de communication mobile (100),
- la connexion de réseau en mode paquet spécifique (200) soit activée ou initialisée pour la transmission de données de services de l'opérateur de rattachement (240), et que la transmission des données de services de l'opérateur de rattachement (240) soit lancée,
- lors de l'achèvement ou de l'arrêt de la transmission des données de services de l'opérateur de rattachement (240) - la connexion de réseau en mode paquet spécifique (200) soit au repos et qu'il soit vérifié que le nom de point d'accès pour les services de l'opérateur de rattachement (120) n'est pas utilisé par l'équipement d'utilisateur (20) pour la transmission de données supplémentaires de services de l'opérateur de rattachement (240) pendant une période de temps correspondant à l'information de temporisation de repos de connexion de réseau en mode paquet (220) après l'achèvement ou l'arrêt de la transmission des données de services de l'opérateur de rattachement (240),
- dans le cas où le nom de point d'accès pour les services de l'opérateur de rattachement (120) n'a pas été utilisé par l'équipement d'utilisateur (20) pour la transmission de données supplémentaires de services de l'opérateur de rattachement (240) pendant une période de temps correspondant à l'information de temporisation de repos de connexion de réseau en mode paquet (220) - la connexion de réseau en mode paquet spécifique (200) soit désactivée ou close par l'équipement d'utilisateur (20).

9. Système selon la revendication 8, réseau de communication mobile (100) selon la revendication 7 ou équipement d'utilisateur (20) selon la revendication 8, dans lequel, au cours de la deuxième étape et avant la troisième étape
- dans le cas où après l'achèvement ou l'arrêt de la transmission des données de services de l'opérateur de rattachement (240), une transmission de données supplémentaires de services de l'opérateur de rattachement (240') est lancée au sein de la période de temps correspondant à l'information de temporisation de repos de connexion de réseau en mode paquet (220) après l'achèvement ou l'arrêt de la transmission des données de services de l'opérateur de rattachement (240) - il est vérifié que le nom de point d'accès pour les services de l'opérateur de rattachement (120) n'est pas utilisé par l'équipement d'utilisateur (20) pour la transmission d'autres données supplémentaires de services de l'opérateur de rattachement (240) pendant une période de temps correspondant à l'information de temporisation de repos de connexion de réseau en mode paquet (220) après l'achèvement ou l'arrêt de la transmission des données supplémentaires de services de l'opérateur de rattachement (240').

10. Programme comprenant un code de programme lisible par ordinateur, qui, lorsqu'il est exécuté sur un ordinateur ou sur un nœud de réseau d'un réseau de communication mobile (100) ou sur un équipement d'utilisateur (20), ou en partie sur le nœud de réseau du réseau de communication mobile (100) et en partie sur l'équipement d'utilisateur (20), fait mettre en œuvre à l'ordinateur ou au nœud de réseau du réseau de communication mobile (100) ou à l'équipement d'utilisateur (20) un procédé selon l'une des revendications 1 à 5.

11. Support lisible par ordinateur, comprenant des instructions qui, lorsqu'elles sont exécutées sur un ordinateur ou sur un nœud de réseau d'un réseau de communication mobile (100) ou sur un équipement d'utilisateur (20), ou en partie sur le nœud de réseau du réseau de communication mobile (100) et en partie sur l'équipement d'utilisateur (20), font mettre en œuvre à l'ordinateur ou au nœud de réseau du réseau de communication mobile (100) ou à l'équipement d'utilisateur (20) un procédé selon l'une des revendications 1 à 5.
